# EUROPÄISCHE PATENTSCHRIFT

(11) **EP 2 185 316 B1**
(45) Veröffentlichungstag und Bekanntmachung des Hinweises auf die Patenterteilung: **29.12.2010**
(21) Anmeldenummer: 08760660.4
(22) Anmeldetag: 06.06.2008
(51) Int. Cl.: B23Q 11/00, A47L 9/14

(54) **HANDWERKZEUGMASCHINE MIT EINER STAUBABSAUGUNGSEINRICHTUNG**
HAND-HELD POWER TOOL HAVING A DUST EXTRACTION DEVICE
MACHINE MANUELLE DOTÉE D'UN DISPOSITIF D'ASPIRATION DE POUSSIÈRE

(30) Priorität: 03.08.2007 DE 102007036783
(43) Veröffentlichungstag der Anmeldung: 19.05.2010
(73) Patentinhaber: Robert Bosch GmbH, 70442 Stuttgart (DE)
(72) Erfinder: SIMM, Robert, CH-4566 Oekingen (CH); LI, Weihong, Binjiang District Hangzhou (CN); ZHOU, Qun, Binjiang District Hangzhou (CN); LV, Yi, Xia Cheng District Hangzhou (CN); LIU, Wei, Xia Cheng District Hangzhou (CN); ZHANG, Gendang, Xiao Shan District Hangzhou (CN); DUESSELBERG, Achim, 70178 Stuttgart (DE); CHEN, Yuexing, Zhejiang (CN)
(86) Internationale Anmeldenummer: PCT/EP2008/057090
(87) Internationale Veröffentlichungsnummer: WO 2009/019057

(56) Entgegenhaltungen:
- EP-A- 1 171 261
- WO-A-03/026840
- DE-A1- 19 530 542
- DE-A1- 19 948 909
- GB-A- 2 314 789
- US-A- 1 782 064

## Beschreibung

Die Erfindung bezieht sich auf eine Handwerkzeugmaschine mit einer Staubabsaugungseinrichtung nach dem Oberbegriff des Anspruches 1.

### Stand der Technik

Eine derartige Handwerkzeugmaschine wird in der EP 1 171 261 B1 beschrieben. Die als Schwingschleifer ausgestaltete Handwerkzeugmaschine weist in einem Gehäuse eine entnehmbare Staubbox zur Aufnahme des Schleifstaubes auf, der der Staubbox über einen Staubführungskanal vom Werkzeug kommend zugeführt wird. In einem Rohrabschnitt des Staubführungskanals befindet sich im Übergang zur Aufnahmeöffnung der Staubbox ein Dichtklappenpaar, mit dem sichergestellt werden soll, dass kein Staub aus der Staubbox zurück in den Staubführungskanal entweichen kann. Das Dichtklappenpaar besteht aus einem Dichtungsmaterial und wird durch seine Eigenspannung in eine Schließposition kraftbeaufschlagt, in der die beiden Dichtklappen dichtend aneinanderliegen und den Strömungsweg versperren. Die Dichtklappen öffnen in Richtung der Staubbox, so dass bereits ein verhältnismäßig geringer Druck des den Schleifstaub heranführenden Luftstromes genügt, um die Dichtklappen zu öffnen und den Strömungsweg in die Staubbox freizugeben. In Gegenrichtung ist dagegen der Strömungsweg erschlossen, da bei einem höheren Druck in der Staubbox die beiden Dichtklappen zusätzlich aneinandergepresst werden, so dass die Schließposition noch verstärkt wird.

Die WO 03/026840 A1 offenbart eine Handwerkzeugmaschine mit einer Staubbox, die über Spannmittel an einem Ausblasrohr der Handwerkzeugmaschine befestigbar ist. Hierfür wird ein Einblasstutzen an der Staubbox auf das Ausblasrohr an der Handwerkzeugmaschine aufgeschoben und mithilfe einer Federklammer fixiert. Im Einblasstutzen befindet sich benachbart zur Einblasöffnung ein Klappenventil, das ein unbeabsichtigtes Austreten des Schleifstaubs aus dem Inneren der Staubbox verhindert. In Einblasrichtung öffnet sich das Klappenventil selbsttätig, so dass Einblasluft, welche Schleifstaub mitführt, in die Staubbox gelangen kann.

Aus der DE 199 48 909 A1 ein Filterbeutel für einen Staubsauger bekannt, der mit einer Durchtrittsöffnung zur Beladung des Staubbeutels im Betrieb des Staubsaugers versehen ist, wobei in der Durchtrittsöffnung eine Verschlussklappe angeordnet ist. Die Verschlussklappe öffnet nur in den Filterbeutel hinein. In Gegenrichtung ist an der Öffnung, welche von der Verschlussklappe zu verschließen ist, ein Absatz gebildet, der ein Öffnen der Verschlussklappe in Gegenrichtung verhindert. Bei einem erhöhten Druck im Filterbeutel wird die Verschlussklappe gegen den Anschlag gedrückt.

Aus der GB 2 314 789 A ist ein Verschlussventil für einen Staubbeutel bekannt, das eine elastische Membrane in der Öffnung des Staubbeutels umfasst, wobei die Membrane an einer Stützstange gehalten ist, die sich an einem übergreifenden Dom abstützt. Die Stützstange dient zur Halterung der flexiblen Membrane, die sich an einem teilkugelförmigen Anlageabschnitt an der Innenwand eines Strömungsrohrs abstützt. Dadurch soll ein sicherer Verschluss in eine Richtung und auf Grund der Elastizität ein Öffnen in Gegenrichtung möglich sein.

### Offenbarung der Erfindung

Der Erfindung liegt die Aufgabe zugrunde, mit einfachen konstruktiven Maßnahmen einen unerwünschten Rückfluss von Staub aus der Staubbox einer Handwerkzeugmaschine zu verhindern.

Diese Aufgabe wird erfindungsgemäß mit den Merkmalen des Anspruches 1 gelöst. Die Unteransprüche geben zweckmäßige Weiterbildungen an.

Die erfindungsgemäße Handwerkzeugmaschine weist eine Staubbox zur Aufnahme des Staubes auf, wobei in einem Rohrabschnitt, der im Strömungsweg vom Werkzeug der Handwerkzeugmaschine zur Staubbox liegt, mindestens eine verstellbare Schließklappe angeordnet ist, die an der Innenwand des Rohrabschnitts verschwenkbar gehalten und in Richtung der Staubbox zu öffnen ist. Im Rohrabschnitt ist ein Anschlag angeordnet, an dem die Schließklappe in der Schließstellung anliegt, wobei der Anschlag sich winklig zur Strömungsrichtung durch den Rohrstutzen erstreckt und eine Anschlagslinie bzw. -fläche bildet, an der die Schließklappe in der Schließposition entsprechend linien- bzw. flächenförmig anliegt.

Der linien- bzw. flächenförmige Anschlag begrenzt die Bewegung der Schließklappe in die Schließposition, wohingegen die Öffnungsbewegung der Schließklappe durch den Anschlag nicht beeinträchtigt wird. In der Schließposition befindet sich die Schließklappe in einer gesicherten Stellung, so dass es bei einer Umkehrung der Druckverhältnisse in der Staubbox oder durch die Einwirkung sonstiger Kräfte wie z.B. das Eigengewicht der Schließklappe eine Öffnungsbewegung in Gegenrichtung sicher verhindert wird, die zu einem Rückfluss des Schleifstaubes aus der Staubbox zurück in Richtung zum Werkzeug führen könnte.

Aufgrund der linien- bzw. flächenförmigen Anlage in Schießposition können auch verhältnismäßig weich ausgebildete Schließklappen eingesetzt werden, ohne dass die Gefahr besteht, dass die Schließklappe sich in einer unerwünschten Weise verformt und dadurch ein Strömungsweg zurück aus der Staubbox freigegeben wird. Es können insbesondere weichelastische Schließklappen verwendet werden, die beispielsweise aus einem Dichtungsmaterial wie Gummi gefertigt sind. Die linien- bzw. flächenförmige Anlage der Schließklappe an dem Anschlag stabilisiert die Schließklappe. Zusätzlich kann die Schließklappe in Richtung ihrer Schließposition kraftbeaufschlagt sein, insbesondere durch Eigenspannungen in der Wandung der Schließklappe, wodurch ein sich selbst stabilisierender Effekt erzielt wird.

Es kommen grundsätzlich verschiedene Ausführungen für den Anschlag im Rohrabschnitt infrage. Erfindungsgemäß wird ein Federdraht verwendet, der sich im Rohrabschnitt winklig zum Strömungsweg erstreckt. Der Federdraht kann zugleich Träger der Schließklappe sein und insbesondere ein Gelenk für das Auf- und Zuschwenken der Schließklappe bilden. Dieses Gelenk ist beispielsweise als ohrförmiger Drahtabschnitt des Federdrahts ausgeführt, der in eine korrespondierende Ausnehmung in der Schließklappe einragt. An diesen ohrförmigen Drahtabschnitt schließt sich ein- oder beidseitig ein Lagerabschnitt an, der in einer Lagerstelle an der Innenwand des Rohrabschnitts aufgenommen ist. Desweiteren ist im Federdraht ein mittlerer Anschlagsabschnitt vorhanden, an dem in der Schließposition die Schließklappe anliegt. Der Federdraht weist den Vorteil einfacher Herstellung und einer leichten Bearbeitung auf, er kann insbesondere dreidimensional verformt werden und sich beispielsweise in seinem Anschlagsabschnitt in zwei Raumrichtungen erstrecken, um hierdurch einen flächigen Anschlag zu bilden. Die Lagerstelle an der Innenwand ist vorzugsweise einteilig mit dem Rohrabschnitt ausgeführt, vorteilhafterweise als Lagernut, in die der Lagerabschnitt des Federdrahts eingesetzt wird.

Gemäß einer anderen vorteilhaften Ausführung ist der Anschlag als Stufe in der Innenwand des Rohrabschnitts ausgebildet. Diese Ausführung hat den Vorteil, dass kein zusätzliches, separates Bauteil für den Anschlag erforderlich ist; vielmehr bildet der Anschlag einen integralen Bestandteil der Innenwand des Rohrabschnittes.

Der Anschlag erstreckt sich winklig zum Strömungsweg, wobei sowohl eine Anordnung senkrecht zum Strömungsweg als auch eine schräg verlaufende Anordnung in Betracht kommt. Insbesondere in der Ausführung des Anschlags als Stufe in der Innenwand des Rohrabschnitts kann ein schräg verlaufender Anschlag gewählt werden, um die Schließklappe je nach Position des Handwerkzeugs durch ihre eigene Gewichtskraft zu öffnen bzw. zu schließen. Hierbei empfiehlt es sich, die Schließklappe bzw. den Anschlag so anzuordnen, dass in den üblichen Betriebspositionen des Handwerkzeugs die Schließklappe unter der Wirkung ihres Eigengewichtes aus der Schließ- in die Öffnungsposition aufschwenkt, da in den regulären Betriebspositionen aufgrund der unten liegenden Anordnung der Staubbox und der Staubzufuhr über eine oben liegende Einströmöffnung ein versehentliches Zurückströmen von Schleifstaub aus der Staubbox heraus verhindert ist. Wird dagegen das Handwerkzeug in eine Position gebracht, in der der gesammelte Schleifstaub durch sein eigenes Gewicht über die Einströmöffnung zurückströmen könnte, wird die Schließklappe durch die Gewichtskraft mit einem schließenden Moment beaufschlagt, so dass der Strömungsweg zurück zum Werkzeug verschlossen ist.

Weitere Vorteile und zweckmäßige Ausführungen sind den weiteren Ansprüchen, der Figurenbeschreibung und den Zeichnungen zu entnehmen. Es zeigen:
- Fig. 1: einen Schnitt durch eine als Bohrmaschine ausgeführte Handwerkzeugmaschine, die im unteren Gehäusebereich mit einer Staubbox versehen ist, der über ein Saugrohr bei der Bearbeitung anfallender Bohrstaub zuführbar ist, wobei das Saugrohr über einen Rohrkrümmer von oben in die Staubbox mündet und im
- Fig. 2: Mündungsbereich eine verstellbare Schließklappe angeordnet ist, eine Ausschnittvergrößerung aus dem Bereich der Schließklappe,
- Fig. 3: eine perspektivische Darstellung des Rohrkrümmers in einer Ansicht von unten, wobei der Rohrkrümmer in seinem stirnseitigen Bereich, der mit der Staubbox zu verbinden ist, eine Lagerstelle zur Aufnahme eines Federdrahtes aufweist, welcher Träger der Schließklappe ist und zugleich einen Anschlag für die Schließklappe in der Schließposition bildet,
- Fig. 4: eine weitere Darstellung des Rohrkrümmers, mit in die Lagerstelle eingesetztem Federdraht,
- Fig. 5: eine weitere Darstellung des Rohrkrümmers, mit zusätzlich eingesetzten Schließklappen,
- Fig. 6: einen Schnitt durch die Rohrwandung des Rohrkrümmers im Bereich der den Federdraht aufnehmenden Lagerstellen,
- Fig. 7 bis 9: verschiedene Ansichten des Federdrahts,
- Fig. 10 bis 12: verschiedene Ansichten einer Schließklappe,
- Fig. 13 und 14: zwei perspektivische Ansichten von zwei am Federdraht montierten Schließklappen,
- Fig. 15: eine schematische Darstellung eines Rohrabschnitts mit zwei integrierten Schließklappen und einem den Anschlag bildenden Federdraht,
- Fig. 16: eine schematische Darstellung eines Rohrabschnitts mit integrierten Schließklappen in einer weiteren Ausführung, bei der die beiden Schließklappen über an der Innenwand befestigte elastische Fäden in die Öffnungsstellung beaufschlagt werden,
- Fig. 17: ein Rohrkrümmer als Teil des Strömungswegs für die den Bohrstaub enthaltende Abluft, mit integrierter Schließklappe, die in Schließposition an einem Anschlag anliegt, der als Stufe in der Innenwand des Krümmers ausgebildet ist,
- Fig. 18: eine Darstellung des Rohrkrümmers einschließlich der den Anschlag bildenden Stufe,
- Fig. 19: die Schließklappe in Einzeldarstellung.

In den Figuren sind gleiche Bauteile mit gleichen Bezugszeichen versehen.

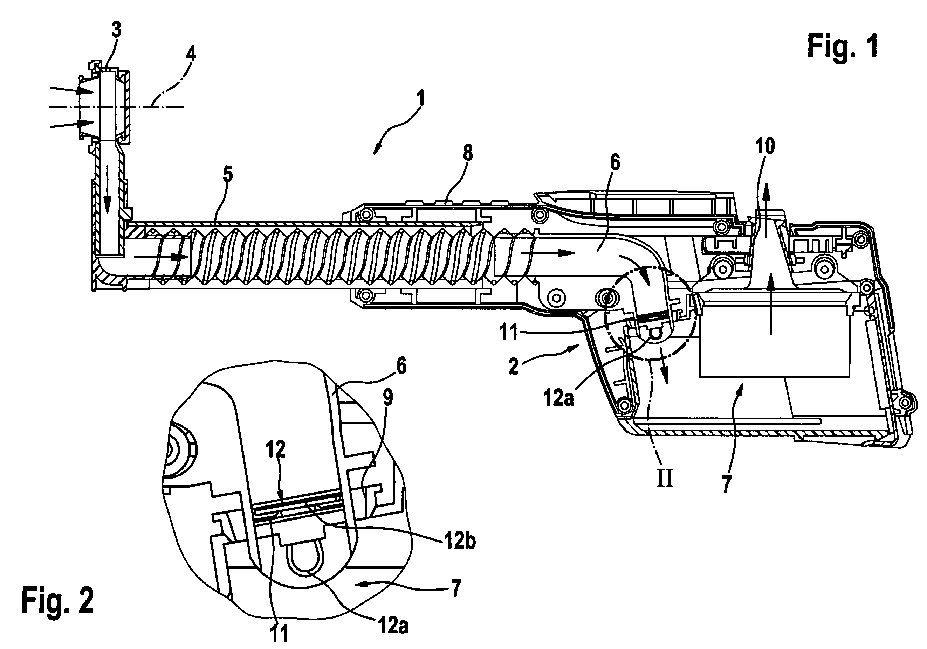

In Fig. 1 ist von der Bohrmaschine 1 im Detail die Staubabsaugungseinrichtung 2 dargestellt, die einen Saugkopf 3, ein Saugrohr 5, einen Rohrkrümmer 6 und eine Staubbox 7 umfasst. Der Saugkopf 3 befindet sich benachbart zum nicht dargestellten drehenden Werkzeug und ist koaxial zur Bohrerachse 4 angeordnet. Der mithilfe eines Ventilators oder dergleichen erzeugte Abluftstrom mit den Staubpartikeln wird über das Saugrohr 5 und den Rohrkrümmer 6 in die Staubbox 7 geleitet, die im unteren Teil des Gehäuse 8 der Werkzeugmaschine angeordnet ist. Der Rohrkrümmer 6, der das Saugrohr 5 mit der Staubbox 7 verbindet, kann fester Bestandteil des Saugrohres 5 sein, wobei ggf. auch eine Ausführung als separates Bauteil in Betracht kommt, und mündet in eine oben liegende Einströmöffnung 9 (siehe Fig. 2) in der Wandung der Staubbox 7. Der Luftstrom wird über eine Abströmöffnung 10, in der vorteilhafterweise ein Filterelement angeordnet ist, aus der Staubbox 7 abgeführt.

Wie Fig. 1 in Verbindung mit der vergrößerten Darstellung nach Fig. 2 zu entnehmen, ist im Bereich der Stirnseite des Rohrkrümmers 6 auf der der Einströmöffnung 9 zugewandten Seite eine Schließklappe 11 in den Rohrkrümmer integriert, die zwischen einer den Strömungsweg versperrenden Schließposition und einer den Strömungsweg freigebenden Öffnungsposition zu verstellen ist. Die Schließklappe 11 ist an einem Federdraht 12 gehalten, der in an der Innenwand des Rohrkrümmers 6 angeordneten Lagerstellen befestigt ist. Der Federdraht 12 besitzt einen ohrförmigen Drahtabschnitt 12a, der das Lager für die Schwenkbarkeit der Schließklappe 11 bildet. Ein mittlerer Abschnitt 12b des Federdrahtes 12 bildet einen Anschlag für die Schließklappe 11, an dem die Schließklappe in der Schließposition anliegt. In der Öffnungsposition schwenkt die Schließklappe aus ihrer Anlage aus dem Anschlagsabschnitt 12b in Richtung des Innenraumes der Staubbox 7 auf. Auf diese Weise ist sichergestellt, dass die Schließklappe 11 unter dem Druck des herangeführten, die Staubpartikel enthaltenden Luftstromes in Richtung der Staubbox 7 öffnen kann, wohingegen in Gegenrichtung eine Öffnung der Schließklappe aufgrund des Anschlages wirksam ausgeschlossen ist. Das Öffnen der Schließklappe 11 erfolgt durch elastisches Aufbiegen der Schließklappenwandung.

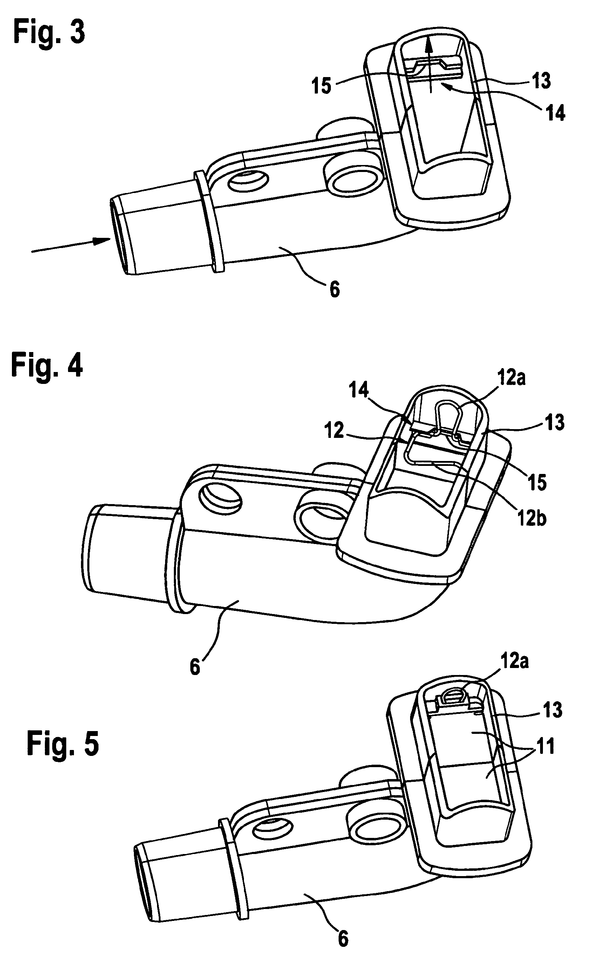

In den Figuren 3 bis 5 sind verschiedene Montageschritte beim Zusammenbau des Rohrstutzens 6 und der Integration der Schließklappe 11 dargestellt. Fig. 3 zeigt zunächst die Ansicht der Stirnseite 13 des Rohrkrümmers 6, die über die Einströmöffnung in der Wandung der Staubbox einragt, vor dem Einbau der Schließklappe. An der Innenwand des Rohrkrümmers 6 befindet sich benachbart zur Stirnseite 13 eine Lagerstelle 14, die aus zwei einteilig mit der Innenwand ausgebildeten, quer zur Strömungsrichtung einragenden und axial zueinander beabstandeten Wandabschnitten besteht, zwischen denen eine Aufnahmenut 15 gebildet ist, die zur Aufnahme eines Lagerabschnitts des Federdrahts 12 dient.

Die Einbausituation mit in die Nut 15 eingesetztem Federdraht ist in Fig. 4 dargestellt. Aus Symmetriegründen befinden sich an gegenüberliegenden Wandinnenseiten des Rohrkrümmers jeweils Lagerstellen 14 mit je einer Aufnahmenut 15, in die jeweils ein Lagerabschnitt des Federdrahts 12 eingeführt ist. Der ohrförmige Drahtabschnitt 12a des Federdrahts 12 liegt in der Einbauposition benachbart und etwa parallel zur Rohrinnenwand des Rohrkrümmers 6. Im Bereich der Stirnseite 13 besitzt der Rohrkrümmer einen etwa rechteckförmigen Querschnitt, wobei die ohrförmigen Drahtabschnitte 12a und die Lagerstellen 14 sich an der Schmalseite des Rechteckes befinden.

In Fig. 5 ist schließlich die Einbauposition mit integrierten Schließklappen 11 dargestellt. Es sind zwei Schließklappen vorgesehen, die jeweils an einem ohrförmigen Drahtabschnitt 12a an gegenüberliegenden Innenwandseiten des Rohrkrümmers 6 schwenkbar gelagert sind. Die beiden Schließklappen 11 sind spiegelsymmetrisch zueinander angeordnet und liegen in der Schließposition stirnseitig aneinander. Gegebenenfalls kommt aber auch eine überlappende Schließposition in Betracht.

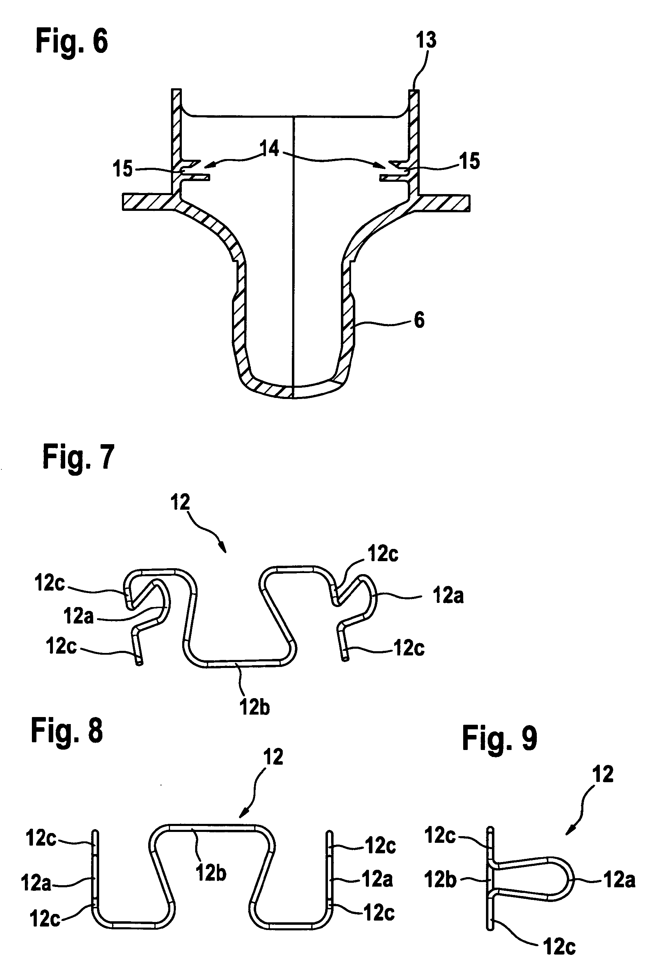

Der Schnittdarstellung des Rohrkrümmers 6 nach Fig. 6 sind die an gegenüberliegenden Innenwandseiten des Rohrkrümmers benachbart zur Stirnseite 13 positionierten Lagerstellen 14 mit den beiden in den Strömungsweg quer einragenden Wandabschnitten mit zwischenliegender Aufnahmenut 15 zu entnehmen.

In den Figuren 7 und 9 ist der Federdraht 12 in verschiedenen Ansichten dargestellt, von denen Fig. 7 eine perspektivische Ansicht, Fig. 8 eine Draufsicht und Fig. 9 eine Seitenansicht zeigt. Der Federdraht 12 ist dreidimensional gebogen und weist in seinen außen liegenden Bereichen jeweils einen ohrförmigen Drahtabschnitt 12a auf, der in der Einbaulage (Fig. 4) parallel zur Innenwand liegt, wohingegen ein mittlerer, die beiden ohrförmigen Drahtabschnitte 12a verbindender Anschlagsabschnitt 12b in einer Ebene senkrecht zu der die ohrförmigen Drahtabschnitte 12a aufnehmenden Ebene liegt. Der Anschlagsabschnitt 12b erstreckt sich mit verschiedenen Teilabschnitten in beide Richtungen der Anschlagsebene. Des Weiteren sind Lagerabschnitte 12c vorgesehen, die beidseitig des ohrförmigen Drahtabschnittes 12a angeordnet sind und in die Aufnahmenut 15 der Lagerstelle 14 (Fig. 6) an der Innenwand des Rohrstutzens aufgenommen sind. Der ohrförmige Drahtabschnitt 12a bildet einen Träger für die Schließklappe, die in Schließposition auf dem mittleren Anschlagsabschnitt 12b aufliegt.

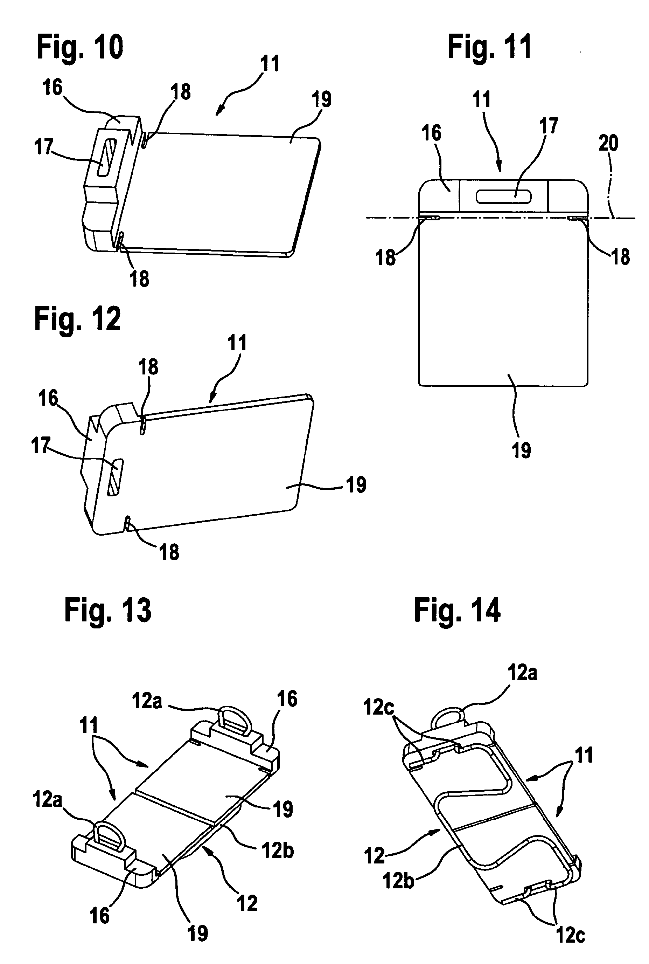

In den Figuren 10 bis 12 sind verschiedene Ansichten der Schließklappe 11 dargestellt, wobei Fig. 10 eine erste perspektivische Darstellung von oben, Fig. 11 eine Draufsicht und Fig. 12 eine zweite perspektivische Darstellung von unten zeigt. Die Schließklappe 11 besteht aus einem Lagerabschnitt 16, in den eine Ausnehmung 17 zur Aufnahme des ohrförmigen Drahtabschnittes 12a des Federdrahts 12 eingebracht ist, und einem Schließteil 19 mit dünner Wandstärke, welcher die eigentliche Schließfunktion ausübt. Die Schließklappe 11 ist zweckmäßigerweise aus einem weichelastischen Material wie z.B. Gummi gefertigt. Der Lagerabschnitt 16 und das Schließteil 19 sind einteilig miteinander ausgebildet, wobei zwischen dem dünnwandigen Schließteil 19 und dem verhältnismäßig dick ausgebildeten Lagerabschnitt 16 jeweils seitliche Einschnitte 18 eingebracht sind, die eine Relativschwenkbewegung des Schließteils 19 gegenüber dem Lagerabschnitt 16 ermöglichen und unterstützen. Die beiden diametral gegenüberliegenden Einschnitte 18 definieren somit eine Schwenkachse 20 für das Schließteil 19, damit dieses zwischen Schließ- und Öffnungsposition verschwenkt werden kann.

In den Figuren 13 und 14 sind jeweils zwei Schließklappen 11 in montierter Position auf dem Federdraht 12 in Darstellungen von oben (Fig. 13) bzw. unten (Fig. 14) in Schließposition gezeigt. Die Unterseite des Schließteils 19 liegt in der Schließposition auf dem Anschlagsabschnitt 12b des Federdrahtes 12b linienförmig auf, wobei aufgrund der Erstreckung des Anschlagsabschnitts 12b in zwei Richtungen der Anschlagsebene eine wirksame Abstützung gegeben ist.

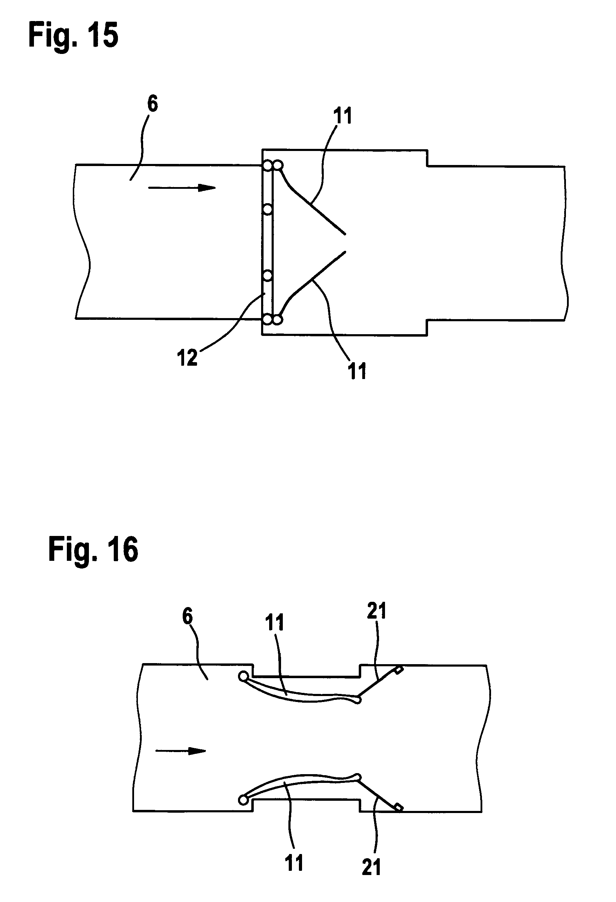

In Fig. 15 ist eine schematische Darstellung des Rohrabschnittes 6 mit zwei integrierten Schließklappen 11 gezeigt, die an gegenüberliegenden Wandinnenseiten des Rohrabschnittes schwenkbar gelagert sind und sich in Schließposition an dem Federdraht 12 abstützen können. In der gezeigten Öffnungsposition sind die Schließklappen 11 um ihr wandnahes Gelenk aufgeschwenkt und geben den Strömungsweg in Richtung der Staubbox frei.

In Fig. 16 ist ein weiteres Ausführungsbeispiel eines Rohrabschnittes 6 mit zwei integrierten Schließklappen 11 dargestellt. Die Schließklappen 11 sind jeweils über einen elastischen Faden 21, der an einem Ende an der Innenwand des Rohrabschnittes und am anderen Ende mit der freien Stirnseite der Schließklappe befestigt ist, in der Öffnungsposition gehalten. Bei einer Strömungsumkehr können die Schließklappen 11 aufgrund der Elastizität der Fäden 21 ihre Schließposition einnehmen, so dass eine Rückströmung von mit Staubpartikeln belasteter Luft aus der Staubbox heraus verhindert wird.

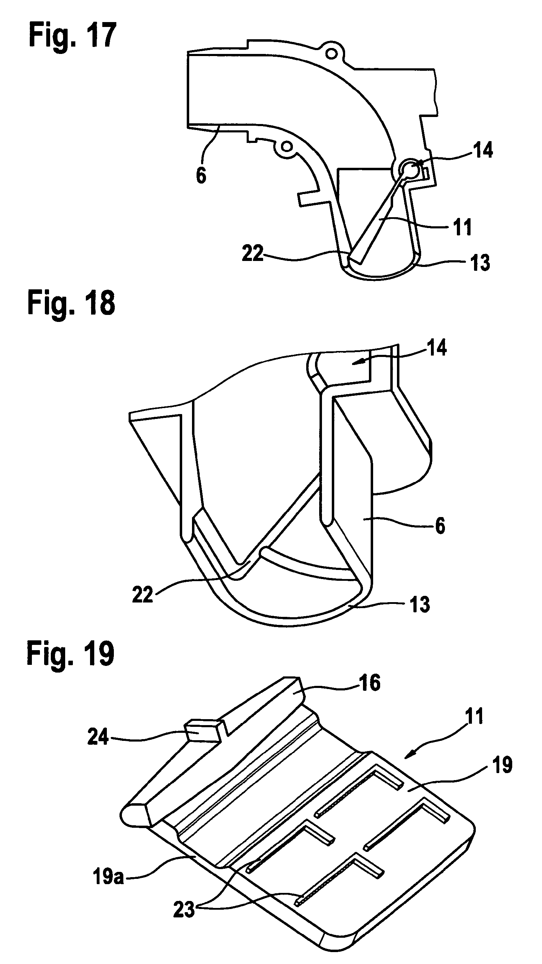

In den Figuren 17 bis 19 ist ein weiteres Ausführungsbeispiel eines Rohrkrümmers mit darin integrierter, einzelner Schließklappe dargestellt. Der Rohrkrümmer 6 weist an nur einer Wandinnenseite eine Lagerstelle 14 auf, die als zylindrische Ausnehmung in der Wandung des Rohrkrümmers ausgebildet ist und zur Aufnahme des Lagerabschnittes 16 an der Schließklappe 11 ausgebildet ist. Dieser Lagerabschnitt 16 ist, wie Fig. 19 zu entnehmen, an den Querschnitt der Ausnehmung in der Lagerstelle 14 angepasst; sowohl die Ausnehmung in der Lagerstelle 14 als auch der Lagerabschnitt 16 besitzen einen nur teilkreisförmigen Querschnitt, so dass eine Rotation des Lagerabschnitts 16 der Schließklappe 11 in der Ausnehmung der Lagerstelle 14 nicht möglich ist. Die Verschwenkbarkeit der Schließklappe 11 wird vielmehr durch einen verjüngten Wandabschnitt 19a (Fig. 19) gebildet, über den das Schließteil 19 der Schließklappe 11 mit dem Lagerabschnitt 16 verbunden ist.

In der Schließposition, die in Fig. 17 dargestellt ist, liegt die Schließklappe 11 an einer Stufe 22 an, die in die Wandinnenseite des Rohrkrümmers 6 eingebracht ist und schräg zur Strömungsrichtung durch den Rohrkrümmer von einer Wandinnenseite zur gegenüberliegenden Wandinnenseite verläuft. Die Stufe 22 besitzt einen abgewinkelten Abschnitt, so dass in Schließposition die Schließklappe 11 über insgesamt zwei Anschlagslinien an der Stufe 22 anliegt.

Zur Versteifung der aus weichelastischem Material gefertigten Schließklappe 11 können im Bereich des Schließteils 19, wie in Fig. 19 dargestellt, Verstärkungsrippen 23 angeordnet sein. Des Weiteren ist dieser Figur zu entnehmen, dass am Lagerabschnitt 16 ein Montagenocken 24 angeordnet ist, der eine Falschmontage des Lagerabschnitts 16 in der Ausnehmung der Lagerstelle 14 verhindern soll.

## Patentansprüche

1. Handwerkzeugmaschine mit einer Staubabsaugungseinrichtung, die eine Staubbox (7) zur Aufnahme von Staub umfasst, wobei in einem Rohrabschnitt (6), der im Strömungsweg zur Staubbox (7) liegt, mindestens eine zwischen Schließ- und Öffnungsposition verstellbare Schließklappe (11) angeordnet ist, die in Richtung der Staubbox (7) zu öffnen ist,
**dadurch gekennzeichnet, dass** ein in den Rohrabschnitt (6) einragender Anschlag (12) vorgesehen ist, an dem die Schließklappe (11) in Schließposition anliegt, wobei der Anschlag (12) sich winklig zur Strömungsrichtung durch den Rohrabschnitt (6) erstreckt und eine Anschlagslinie oder -fläche bildet, an der die Schließklappe (11) in Schließposition linien- bzw. flächenförmig anliegt, und dass der Anschlag als Federdraht (12) ausgebildet ist, der sich im Rohrabschnitt (6) winklig zum Strömungsweg erstreckt.

2. Handwerkzeugmaschine nach Anspruch 1,
**dadurch gekennzeichnet, dass** der Federdraht (12) zugleich Träger der Schließklappe (11) ist.

3. Handwerkzeugmaschine nach Anspruch 2,
**dadurch gekennzeichnet, dass** der Federdraht (12) einen ohrförmigen Drahtabschnitt (12a) aufweist, der in eine Ausnehmung (17) in der Schließklappe (11) einragt.

4. Handwerkzeugmaschine nach Anspruch 2 oder 3,
**dadurch gekennzeichnet, dass** der Federdraht (12) einen mittleren Anschlagsabschnitt (12b) aufweist.

5. Handwerkzeugmaschine nach einem der Ansprüche 2 bis 4,
**dadurch gekennzeichnet, dass** der Federdraht (12) einen Lagerabschnitt (12c) aufweist, der in einer Lagerstelle (14) an der Rohrinnenwand aufgenommen ist.

6. Handwerkzeugmaschine nach einem der Ansprüche 1 bis 5,
**dadurch gekennzeichnet, dass** der Anschlag als Stufe (22) in der Innenwand des Rohrabschnitts (6) ausgebildet ist.

7. Handwerkzeugmaschine nach Anspruch 6,
**dadurch gekennzeichnet, dass** die Stufe (22) schräg zur Strömungsrichtung im Rohrabschnitt (6) liegt.

8. Handwerkzeugmaschine nach einem der Ansprüche 1 bis 7,
**dadurch gekennzeichnet, dass** die Schließklappe (11) aus einem weichelastischen Material besteht.

9. Handwerkzeugmaschine nach einem der Ansprüche 1 bis 8,
**dadurch gekennzeichnet, dass** die Schließklappe (11) in ihre Schließposition kraftbeaufschlagt ist, insbesondere durch ihre Eigenspannung.

10. Handwerkzeugmaschine nach einem der Ansprüche 1 bis 9,
**dadurch gekennzeichnet, dass** die Schließklappe (11) Versteifungsrippen (23) aufweist.

11. Handwerkzeugmaschine nach einem der Ansprüche 1 bis 10,
**dadurch gekennzeichnet, dass** zwei Schließklappen (11) an gegenüberliegenden Innenwandseiten des Rohrabschnitts (6) angeordnet sind.

12. Handwerkzeugmaschine nach Anspruch 11,
**dadurch gekennzeichnet, dass** die beiden Schließklappen (11) spiegelsymmetrisch zueinander ausgebildet sind.

13. Handwerkzeugmaschine nach einem der Ansprüche 1 bis 12,
**dadurch gekennzeichnet, dass** die Schließklappe einen Lagerabschnitt (16), der in der Lagerstelle (14) im Rohrabschnitt (6) aufgenommen ist, und ein Schließteil (19) umfasst, das gegenüber dem Lagerabschnitt (16) um eine Schwenkachse zu verschwenken ist.

14. Handwerkzeugmaschine nach Anspruch 13,
**dadurch gekennzeichnet, dass** zwischen Lagerabschnitt (16) und Schließteil (19) ein verjüngter Wandabschnitt (19a) gebildet ist.

15. Handwerkzeugmaschine nach Anspruch 13 oder 14,
**dadurch gekennzeichnet, dass** im Übergang von Lagerabschnitt (16) zu Schließteil (19) mindestens ein Einschnitt (18) vorhanden ist.

16. Handwerkzeugmaschine nach einem der Ansprüche 1 bis 15,
**dadurch gekennzeichnet, dass** der Rohrabschnitt als Rohrkrümmer (6) ausgebildet ist, der mit einer Einströmöffnung (9) in der Staubbox (7) verbunden ist.

17. Handwerkzeugmaschine nach einem der Ansprüche 1 bis 16,
**dadurch gekennzeichnet, dass** die Schließklappe (11) um eine Achse im Bereich der Innenwand des Rohrabschnitts (6) verschwenkbar ist.

## Claims

1. Hand-held power tool having a dust extraction device which comprises a dust box (7) for receiving dust, wherein at least one closing flap (11) which can be adjusted between a closed position and an open position and which is to be opened in the direction of the dust box (7) is arranged in a tube section (6) which lies in the flow path to the dust box (7), **characterized in that** a stop (12) projecting into the tube section (6) is provided, against which stop (12) the closing flap (11) bears in the closed position, wherein the stop (12) extends at an angle to the flow direction through the tube section (6) and forms a stop line or surface, against which the closing flap (11) bears linearly or in a planar manner in the closed position, and **in that** the stop is designed as a spring wire (12) which extends in the tube section (6) at an angle to the flow path.

2. Hand-held power tool according to Claim 1, **characterized in that** the spring wire (12) is at the same time a support for the closing flap (11).

3. Hand-held power tool according to Claim 2, **characterized in that** the spring wire (12) has an ear-shaped wire section (12a) which projects into an aperture (17) in the closing flap (11).

4. Hand-held power tool according to Claim 2 or 3, **characterized in that** the spring wire (12) has a middle stop section (12b).

5. Hand-held power tool according to one of Claims 2 to 4, **characterized in that** the spring wire (12) has a bearing section (12c) which is accommodated at a bearing point (14) on the tube inner wall.

6. Hand-held power tool according to one of Claims 1 to 5, **characterized in that** the stop is designed as a step (22) in the inner wall of the tube section (6).

7. Hand-held power tool according to Claim 6, **characterized in that** the step (22) lies obliquely to the flow direction in the tube section (6).

8. Hand-held power tool according to one of Claims 1 to 7, **characterized in that** the closing flap (11) is made of a flexible material.

9. Hand-held power tool according to one of Claims 1 to 8, **characterized in that** the closing flap (11) is displaced into its closed position by being subjected to a force, in particular by its internal stress.

10. Hand-held power tool according to one of Claims 1 to 9, **characterized in that** the closing flap (11) has reinforcing ribs (23).

11. Hand-held power tool according to one of Claims 1 to 10, **characterized in that** two closing flaps (11) are arranged on opposite inner wall sides of the tube section (6).

12. Hand-held power tool according to Claim 11, **characterized in that** the two closing flaps (11) are designed in mirror symmetry to one another.

13. Hand-held power tool according to one of Claims 1 to 12, **characterized in that** the closing flap has a bearing section (16), which is accommodated at the bearing point (14) in the tube section (6), and comprises a closing part (19) which can be pivoted about a pivot axis relative to the bearing section (16).

14. Hand-held power tool according to Claim 13, **characterized in that** a narrowed wall section (19a) is formed between bearing section (16) and closing part (19).

15. Hand-held power tool according to Claim 13 or 14, **characterized in that** there is at least one incision (18) in the transition from the bearing section (16) to closing part (19).

16. Hand-held power tool according to one of Claims 1 to 15, **characterized in that** the tube section is designed as a tube bend (6) which is connected to an inflow opening (9) in the dust box (7).

17. Hand-held power tool according to one of Claims 1 to 16, **characterized in that** the closing flap (11) can be pivoted about an axis in the region of the inner wall of the tube section (6).

## Revendications

1. Machine-outil à main avec un dispositif d'aspiration de poussière, qui comprend une boîte à poussière (7) pour recevoir la poussière, au moins un clapet de fermeture (11) réglable entre une position de fermeture et une position d'ouverture étant disposé dans une section tubulaire (6) qui se trouve dans le passage de l'écoulement vers la boîte à poussière (7), le clapet de fermeture (11) devant être ouvert dans la direction de la boîte à poussière (7),
**caractérisée en ce qu'**une butée (12) pénétrant dans la section tubulaire (6) est prévue, le clapet de fermeture (11) s'appliquant contre celle-ci dans la position de fermeture, la butée (12) s'étendant suivant un certain angle par rapport à la direction de l'écoulement à travers la section tubulaire (6) et formant une ligne ou une surface de butée, contre laquelle le clapet de fermeture (11) s'applique dans la position de fermeture sous forme linéaire ou sur sa surface, et **en ce que** la butée est réalisée sous forme de fil à ressort (12), qui s'étend dans la section tubulaire (6) suivant un certain angle par rapport au passage de l'écoulement.

2. Machine-outil à main selon la revendication 1,
**caractérisée en ce que** le fil à ressort (12) est en même temps un support pour le clapet de fermeture (11).

3. Machine-outil à main selon la revendication 2,
**caractérisée en ce que** le fil à ressort (12) présente une section de fil en forme d'oreille (12a), qui pénètre dans un évidement (17) dans le clapet de fermeture (11).

4. Machine-outil à main selon la revendication 2 ou 3,
**caractérisée en ce que** le fil à ressort (12) présente une section de butée centrale (12b).

5. Machine-outil à main selon l'une quelconque des revendications 2 à 4,
**caractérisée en ce que** le fil à ressort (12) présente une section de palier (12c) qui est reçue dans un point de palier (14) au niveau de la paroi interne tubulaire.

6. Machine-outil à main selon l'une quelconque des revendications 1 à 5,
**caractérisée en ce que** la butée est réalisée sous forme de gradin (22) dans la paroi interne de la section tubulaire (6).

7. Machine-outil à main selon la revendication 6,
**caractérisée en ce que** le gradin (22) est situé obliquement par rapport à la direction de l'écoulement dans la section tubulaire (6).

8. Machine-outil à main selon l'une quelconque des revendications 1 à 7,
**caractérisée en ce que** le clapet de fermeture (11) se compose d'un matériau flexible élastique.

9. Machine-outil à main selon l'une quelconque des revendications 1 à 8,
**caractérisée en ce que** le clapet de fermeture (11) est sollicité dans sa position de fermeture par une force, en particulier par sa propre tension.

10. Machine-outil à main selon l'une quelconque des revendications 1 à 9,
**caractérisée en ce que** le clapet de fermeture (11) présente des nervures de renforcement (23).

11. Machine-outil à main selon l'une quelconque des revendications 1 à 10,
**caractérisée en ce que** deux clapets de fermeture (11) sont disposés sur des côtés opposés de la paroi interne de la section tubulaire (6).

12. Machine-outil à main selon la revendication 11,
**caractérisée en ce que** les deux clapets de fermeture (11) sont réalisés avec une symétrie spéculaire l'un par rapport à l'autre.

13. Machine-outil à main selon l'une quelconque des revendications 1 à 12,
**caractérisée en ce que** le clapet de fermeture comprend une section de palier (16) qui est reçue dans le point de palier (14) dans la section tubulaire (6), et une partie de fermeture (19), qui peut pivoter par rapport à la section de palier (16) autour d'un axe de pivotement.

14. Machine-outil à main selon la revendication 13,
**caractérisée en ce qu'**entre la section de palier (16) et la partie de fermeture (19) est formée une section de paroi rétrécie (19a).

15. Machine-outil à main selon la revendication 13 ou 14,
**caractérisée en ce qu'**au moins une entaille (18) est réalisée dans la transition entre la section de palier (16) et la partie de fermeture (19).

16. Machine-outil à main selon l'une quelconque des revendications 1 à 15,
**caractérisée en ce que** la section tubulaire est réalisée sous forme de collecteur tubulaire (6), qui est connecté à une ouverture d'afflux (9) dans la boîte à poussière (7).

17. Machine-outil à main selon l'une quelconque des revendications 1 à 16,
**caractérisée en ce que** le clapet de fermeture (11) peut pivoter autour d'un axe dans la région de la paroi interne de la section tubulaire (6).
